# EUROPEAN PATENT APPLICATION

(11) **EP 4 684 905 A1**
(43) Date of publication of application: **28.01.2026**
(21) Application number: 24852129.6
(22) Date of filing: 24.07.2024
(51) Int. Cl.: B23K 26/362, B23K 26/38, B23K 26/08, H01M 4/04, H01M 50/531, B23K 101/36

(54) **NOTCHING DEVICE**

(30) Priority: 04.08.2023 KR 20230102491
(71) Applicant: LG ENERGY SOLUTION, LTD., Seoul 07335 (KR)
(72) Inventor: LEE, Seung Hyuk, Daejeon 34122 (KR); LEE, Jae Young, Daejeon 34122 (KR); JO, Hyeon Sung, Daejeon 34122 (KR)
(74) Representative: Goddar, Heinz J.
(86) International application number: PCT/KR2024/010713
(87) International publication number: WO 2025/033773

(57) **Abstract**

A notching device, which cuts an electrode that is transferred in a certain direction and includes a metal layer, a first insulating layer laminated on an upper surface of the metal layer, and a second insulating layer laminated on a lower surface of the metal layer, the notching device according to an embodiment of the present disclosure may include a first light source unit located above the electrode and irradiating a laser so that the laser passes through the first insulating layer and reaches the metal layer, and a second light source unit located on one side of the first light source unit and irradiating a laser so that the laser passes through the first insulating layer and the metal layer and reaches the lower surface of the second insulating layer.

## Description

### TECHNICAL FIELD

### CROSS-REFERENCE TO RELATED APPLICATIONS

The present application claims priority to Korean Patent Application No. 10-2023-0102491 filed on August 4, 2023 in the Republic of Korea, the disclosures of which are incorporated herein by reference.

### TECHNICAL FIELD

The present disclosure relates to a notching device for notching an electrode of a secondary battery.

### BACKGROUND ART

In order to solve the environmental pollution caused by the use of petroleum resources and the shortage problem of energy sources due to the depletion of petroleum resources, research and development on power generation based on eco- friendly energy sources are in progress. In particular, research on secondary batteries with high utilization due to repeated charge/discharge is being actively conducted, and various aspects such as materials, structures, processes, and stability of secondary batteries are being studied.

In general, types of secondary batteries include nickel cadmium batteries, nickel hydrogen batteries, lithium-ion batteries, and lithium-ion polymer batteries. These secondary batteries are applied and used not only in small products such as digital cameras, P-DVDs, MP3Ps, mobile phones, PDAs, portable game devices, power tools, and E-bikes, but also in large products requiring high power such as electric vehicles or hybrid vehicles, in power storage devices that store surplus generated power or renewable energy, and in power storage devices for backup.

To manufacture such a secondary battery, an electrode active material slurry is first applied to a positive electrode current collector and a negative electrode current collector to manufacture a positive electrode and a negative electrode, which are then stacked on both sides of a separator to form an electrode assembly having a predetermined shape. And, the electrode assembly is accommodated in a battery case, an electrolyte is injected, and then the battery case is sealed.

Secondary batteries are also classified according to the structure of the electrode assembly having a structure in which a positive electrode, a negative electrode, and a separator interposed between the positive electrode and the negative electrode are laminated. The electrode assembly according to this classification may include a jelly-roll type (winding type) electrode assembly in which long sheet-like positive electrodes and negative electrodes are wound with a separator interposed therebetween, and a stack type (laminated type) electrode assembly in which a plurality of positive electrodes and negative electrodes cut into units of a predetermined size are sequentially laminated with a separator interposed therebetween. Recently, in order to solve the problems of the jelly-roll type electrode assembly and the stack type electrode assembly, a stack/folding type electrode assembly, which is a mixed form of the jelly-roll type and the stack type, in which unit cells where positive electrodes and negative electrodes of predetermined units are laminated with a separator interposed therebetween are sequentially wound in a state of being positioned on a separator film, is also being used.

In general, these secondary batteries are completed by applying an electrode mixture including an electrode active material, a conductive agent, a binder, and the like on an electrode current collector, drying the mixture to manufacture an electrode, laminating the manufactured electrode with a separator, and then embedding and sealing it in a battery case together with an electrolyte solution.

In this case, the electrode is composed of an electrode sheet including a coated portion where the electrode active material is applied and an uncoated portion where the electrode active material is not applied. And, an insulating layer is applied to the end of the coated portion, that is, the starting point of the uncoated portion, in order to prevent a short circuit phenomenon in which the positive electrode and the negative electrode contact each other due to the contraction of the separator.

The electrode is manufactured by forming an electrode tab on the electrode sheet by a notching process and then cutting it to a predetermined length. In general, the electrode tab notching process is performed using a punch and a jig including a cutting portion having a shape corresponding to the electrode tab, and recently, it is performed using a laser in order to form an electrode with more precise dimensions.

However, in the process of notching the electrode using a laser, there was a problem that energy exceeding a certain amount was applied to the point of the electrode receiving the laser, resulting in damage to the periphery of the irradiation point or deterioration in the notching quality.

To compensate for this, there is a need for a notching device that prevents damage to the periphery and deterioration in the notching quality while utilizing the laser notching method.

### SUMMARY

### TECHNICAL PROBLEM

The present disclosure is directed to providing a notching device that irradiates the same point of the electrode with different laser depths.

The present disclosure is also directed to providing a notching device that sequentially irradiates the laser through different light source units.

### TECHNICAL SOLUTION

A notching device, which cuts an electrode that is transferred in a certain direction and includes a metal layer, a first insulating layer laminated on an upper surface of the metal layer, and a second insulating layer laminated on a lower surface of the metal layer, the notching device according to an embodiment of the present disclosure may include a first light source unit located above the electrode and irradiating a laser so that the laser passes through the first insulating layer and reaches the metal layer, and a second light source unit located on one side of the first light source unit and irradiating a laser so that the laser passes through the first insulating layer and the metal layer and reaches the lower surface of the second insulating layer.

The first light source unit and the second light source unit may be disposed sequentially along the transfer direction of the electrode.

The first light source unit may irradiate the laser while moving along a first path, and the second light source unit may irradiate the laser while moving along a second path, wherein the shape of the first path and the shape of the second path may be identical to each other.

The shape of the second path may be a shape in which the shape of the first path moves a certain distance.

The first path and the second path may include a first section formed along the transfer direction of the electrode, a second section formed in a diagonal direction from one end of the first section, a third section formed along the transfer direction of the electrode from one end of the second section and formed at the end of the electrode further than the first section, and a fourth section formed in a diagonal direction from the third section and connected to the other end of the first section.

When the first light source unit passes through the second section, the second light source unit may pass through the first section, when the first light source unit passes through the third section, the second light source unit may pass through the second section, when the first light source unit passes through the fourth section, the second light source unit may pass through the third section, and when the first light source unit passes through the first section, the second light source unit may pass through the fourth section.

The first light source unit and the second light source unit may sequentially irradiate the laser to create an uneven shape on the electrode.

The first path and the second path may include a circulated form.

The second light source unit may irradiate the laser to a point of the electrode to which the first light source unit irradiates the laser.

The notching device according to an embodiment of the present disclosure may further include a pattern jig positioned on the opposite side of the first light source unit and the second light source unit based on the electrode and forming a path along which the first light source unit and the second light source unit irradiate the laser.

The pattern jig may include a first path formed so that the first light source unit moves along and irradiates the laser, and a second path formed so that the second light source unit moves along and irradiates the laser, wherein the shape of the first path and the shape of the second path may be identical to each other, and the shape of the second path may be a shape in which the shape of the first path moves a certain distance.

The first path and the second path may include a first section formed along the transfer direction of the electrode, a second section formed in a diagonal direction from one end of the first section, a third section formed along the transfer direction of the electrode from one end of the second section and formed at the end of the electrode further than the first section, and a fourth section formed in a diagonal direction from the third section and connected to the other end of the first section.

The first light source unit and the second light source unit may sequentially irradiate the laser to create an uneven shape on the electrode.

While the position of the pattern jig is fixed and the first light source unit and the second light source unit are located above the electrode, a portion of the electrode may move between the first light source unit and the second light source unit and the pattern jig.

### ADVANTAGEOUS EFFECTS

According to a preferred embodiment of the present disclosure, by irradiating the same point of the electrode with different laser depths, damage to the periphery of the notching point may be prevented and the notching quality may be further secured.

According to a preferred embodiment of the present disclosure, by sequentially irradiating the laser through different light source units, the energy used in the laser notching process may be used more effectively.

In addition, effects that may be easily predicted by those skilled in the art from configurations according to preferred embodiments of the present disclosure may be included.

### BRIEF DESCRIPTION OF THE DRAWINGS

The accompanying drawings illustrate a preferred embodiment of the present disclosure and together with the following detailed description, serve to provide a further understanding of the technical aspect of the present disclosure, and thus, the present disclosure should not be construed as being limited to the drawings.
FIG. 1 is a perspective view of a notching device according to an embodiment of the present disclosure.
FIG. 2 is a view for describing the operation of a notching device according to an embodiment of the present disclosure.
FIG. 3 is a view showing a first path and a second path according to an embodiment of the present disclosure.
FIG. 4 is a view showing one of a first path and a second path according to an embodiment of the present disclosure.
FIG. 5 is a plan view of a notching device according to an embodiment of the present disclosure.
FIG. 6 is a schematic view of a notching device according to another embodiment of the present disclosure.
FIG. 7 is a schematic view of a pattern jig according to another embodiment of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

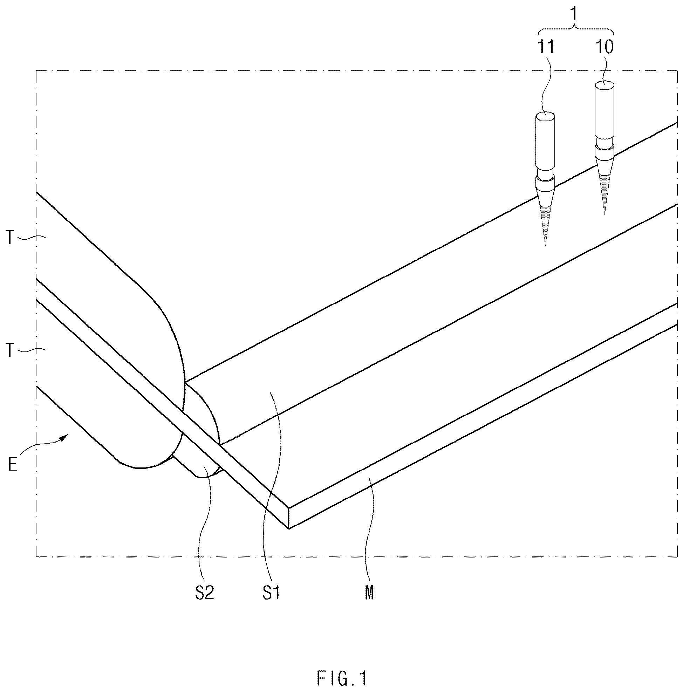

FIG. 1 is a perspective view of a notching device 1 according to an embodiment of the present disclosure.

Referring to FIG. 1, the notching device 1 according to an embodiment of the present disclosure may notch a portion of the electrode E. For example, the notching device 1 may cut a portion of the electrode E by irradiating a laser to the portion of the electrode E. Specifically, the notching device 1 is positioned above the electrode E and irradiates a laser toward an upper surface of the electrode E, and the electrode E is transferred in a certain direction, so that a portion of the electrode E may be cut into a certain shape.

The electrode E may include a metal layer M formed of a metal material, an active material layer T applied to at least one surface of the metal layer M for a chemical reaction, and insulating layers S1, S2 formed at the end of the active material layer T and composed of an insulating material.

The active material may refer to an active material that generates electrical energy through a chemical reaction of lithium ions. The active material may include a positive electrode active material applied to a positive electrode plate and a negative electrode active material applied to a negative electrode plate.

The electrode E is composed of a coated portion to which the active material is applied and an uncoated portion to which the active material is not applied, and the insulating layer may be formed at the end of the coated portion, that is, at the starting part of the uncoated portion. In other words, the insulating layer may be applied to an upper surface and a lower surface of the uncoated portion at the point where the coated portion and the uncoated portion are connected.

When the active material layer T is applied to both surfaces of the metal layer M, the insulating layer may include a first insulating layer S1 laminated on an upper surface of the metal layer M and a second insulating layer S2 laminated on a lower surface of the metal layer M.

A thinly spread electrode E is manufactured through a roll pressing process and is transferred in a certain direction, and the notching device 1 may cut other parts at a certain level except for a part for grounding a tab to the uncoated portion to which the active material is not applied.

The notching device 1 may include a first light source unit 10 and a second light source unit 11.

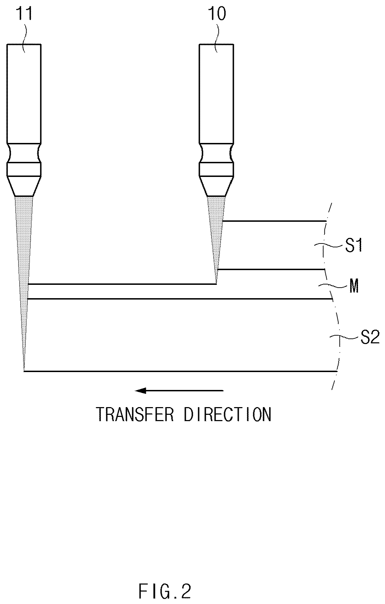

FIG. 2 is a view for describing the operation of a notching device 1 according to an embodiment of the present disclosure.

Referring to FIG. 2, the first light source unit 10 is located above the electrode E and may irradiate the laser toward the electrode E. For example, the first light source unit 10 may irradiate the laser so that the laser passes through the first insulating layer S1 and reaches the metal layer M. That is, the first light source unit 10 may irradiate the laser to the electrode E so that the laser does not reach the second insulating layer S2.

The second light source unit 11 is located on one side of the first light source unit 10 and may irradiate the laser toward the electrode E. For example, the second light source unit 11 may be located above the electrode E like the first light source unit 10.

The first light source unit 10 and the second light source unit 11 may be disposed sequentially along the transfer direction of the electrode E. In other words, the second light source unit 11 may be located in a region moved along the transfer direction of the electrode E from the first light source unit 10.

The laser irradiated by the second light source unit 11 may penetrate deeper into the electrode E than the laser irradiated by the first light source unit 10. For example, the second light source unit 11 may irradiate the laser so that the laser passes through the first insulating layer S1 and the metal layer M and reaches the lower surface of the second insulating layer S2.

Such a difference in the laser depth may be controlled by adjusting parameters of the first light source unit 10 and the second light source unit 11. For example, the parameters may include focusing, power, and frequency.

Additionally, the second light source unit 11 may irradiate the laser to a point of the electrode E to which the first light source unit 10 irradiates the laser. In other words, the first light source unit 10 and the second light source unit 11 may sequentially irradiate the laser so as to irradiate the laser to the same point of the electrode E.

Specifically, after the first light source unit 10 irradiates the laser at a specific point of the electrode E, the electrode E is transferred a certain distance along the transfer direction, and the second light source unit 11 may irradiate the laser again at the specific point where the first light source unit 10 irradiated the laser.

That is, in a state where the first light source unit 10 firstly irradiates the laser so as to cut through the first insulating layer S1 to a portion of the metal layer M, the second light source unit 11 may secondly irradiate the laser so as to cut through a portion of the remaining metal layer M to the second insulating layer S2.

More specifically, the first light source unit 10 and the second light source unit 11 may irradiate the laser toward the electrode E while forming a certain path and moving.

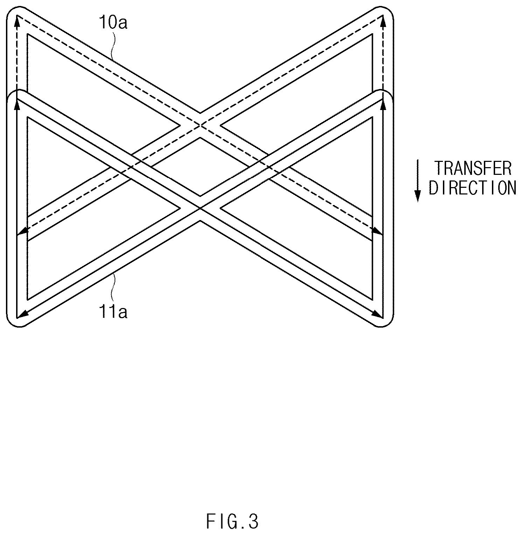

FIG. 3 is a view showing a first path 10a and a second path 11a according to an embodiment of the present disclosure.

Referring to FIG. 3, the first light source unit 10 may irradiate the laser while moving along the first path 10a, and the second light source unit 11 may irradiate the laser while moving along the second path 11a. Since the first light source unit 10 and the second light source unit 11 have the same movement pattern, the shape of the first path 10a and the shape of the second path 11a may be identical to each other.

Additionally, since the first light source unit 10 and the second light source unit 11 move in a state of being spaced apart from each other at a certain interval, the shape of the second path 11a may be a shape in which the shape of the first path 10a moves a certain distance. In other words, the first path 10a and the second path 11a may be formed by being spaced apart from each other by the distance where the first light source unit 10 and the second light source unit 11 are spaced apart.

Furthermore, the first path 10a and the second path 11a may form a partially overlapping region. However, the first path 10a and the second path 11a do not necessarily overlap each other, and whether they do or do not overlap depending on the shape of the cut surface of the electrode E or the notching process may vary.

The first path 10a and the second path 11a may include a circulated form. In other words, the first path 10a and the second path 11a may include a repeatedly circulated form.

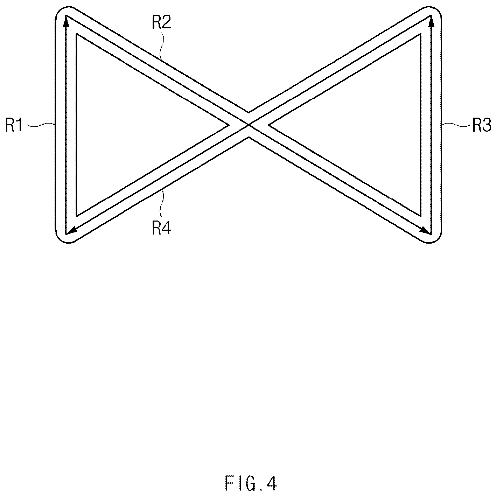

FIG. 4 is a view showing one of a first path 10a and a second path 11a according to an embodiment of the present disclosure.

Referring to FIG. 4, the first path 10a and the second path 11a may include a first section R1 formed along the transfer direction of the electrode E, a second section R2 formed in a diagonal direction from one end of the first section R1, a third section R3 formed along the transfer direction of the electrode E from one end of the second section R2 and formed at the end of the electrode E further than the first section R1, and a fourth section R4 formed in a diagonal direction from the third section R3 and connected to the other end of the first section R1. In this case, the second section R2 and the fourth section R4 may be formed to intersect each other.

That is, the first light source unit 10 and the second light source unit 11 may move sequentially through the first section R1 to the fourth section R4, and may irradiate the laser toward the electrode E while repeatedly circulating in the first section R1 to the fourth section R4.

In this case, as described above, the first light source unit 10 and the second light source unit 11 may move sequentially with a time difference from each other. Specifically, when the first light source unit 10 repeatedly moves along the first path 10a, the second light source unit 11 may move in a section before the movement section of the first light source unit 10.

For example, when the first light source unit 10 passes through the second section R2, the second light source unit 11 may pass through the first section R1, and when the first light source unit 10 passes through the third section R3, the second light source unit 11 may pass through the second section R2. Likewise, when the first light source unit 10 passes through the fourth section R4, the second light source unit 11 may pass through the third section R3, and when the first light source unit 10 passes through the first section R1, the second light source unit 11 may pass through the fourth section R4.

Furthermore, considering the transfer speed of the electrode E, the first light source unit 10 and the second light source unit 11 may irradiate the laser while moving in the second section R2 or the fourth section R4 so that the electrode E is cut in the direction in which the metal layer M protrudes from the active material layer T, that is, in the width direction of the electrode E.

That is, when the first light source unit 10 and the second light source unit 11 pass through the second section R2, the electrode E may be cut along the direction in which the metal layer M protrudes from the active material layer T. Conversely, when the first light source unit 10 and the second light source unit 11 pass through the fourth section R4, the electrode E may be cut in a direction opposite to the direction in which the metal layer M protrudes.

Additionally, when the first light source unit 10 and the second light source unit 11 pass through the first section R1 or the third section R3, the electrode E may be cut in a direction parallel to the transfer direction of the electrode E.

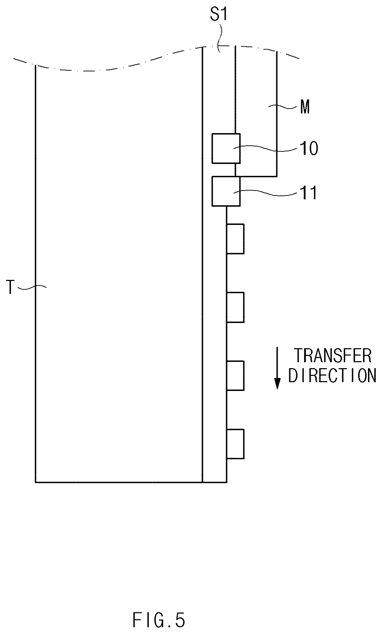

FIG. 5 is a plan view of a notching device 1 according to an embodiment of the present disclosure.

Referring to FIG. 5, according to the irradiation method of the first light source unit 10 and the second light source unit 11 according to the first path 10a and the second path 11a, the first light source unit 10 and the second light source unit 11 may sequentially irradiate the laser to create an uneven shape on the electrode E while moving along the first path 10a and the second path 11a. That is, protrusions protruding at regular intervals and depressions recessed at regular intervals may be formed on the uncoated portion of the electrode E. The electrode E tabs may be grounded to the protrusions of the uncoated portion.

In this regard, when only a single laser irradiation device is provided and the laser irradiation is performed only once, there is a problem that the laser penetrates deeply and thus the portion where the laser meets the surface with respect to the electrode E is formed more, resulting in damage to the cut portion. On the contrary, when the laser penetrates thinly, there is a problem that an uncut portion is created and thus the notching quality is degraded.

Additionally, when the notching process is performed twice with different laser depths using only a single laser, the notching time may be excessively increased, which may cause a problem of lowering the efficiency of the notching process.

As a result, the first light source unit 10 and the second light source unit 11 are disposed along the transfer direction of the electrode E, and may sequentially irradiate the same point of the electrode E with different laser depths, thereby preventing damage to the periphery of the notching point and further securing the notching quality.

Furthermore, since cutting the electrode E by sequentially transmitting the laser twice rather than transmitting the laser once uses the energy used to irradiate the laser more efficiently, the energy used for the laser notching process may be used more efficiently by sequentially irradiating the laser through the first light source unit 10 and the second light source unit 11 in this way.

Hereinafter, a notching device 1 according to another embodiment of the present disclosure will be described. Any contents overlapping with the contents of the notching device 1 according to the embodiment of the present disclosure described above will be omitted.

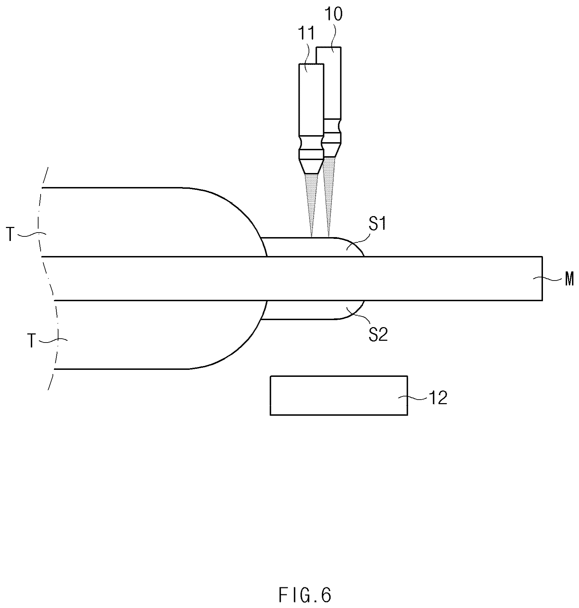

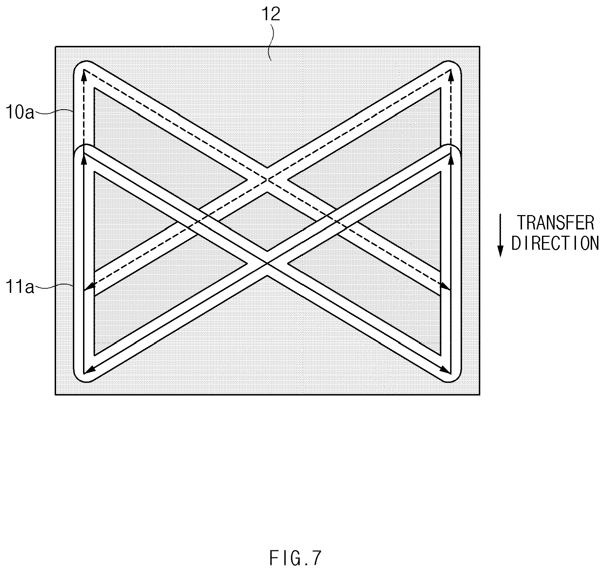

FIG. 6 is a schematic view of a notching device 1 according to another embodiment of the present disclosure, and FIG. 7 is a schematic view of a pattern jig 12 according to another embodiment of the present disclosure.

Referring to FIGS. 6 and 7, a notching device 1 according to another embodiment of the present disclosure may further include a pattern jig 12 positioned on the opposite side of the first light source unit 10 and the second light source unit 11 based on the electrode E and forming a path along which the first light source unit 10 and the second light source unit 11 irradiate the laser. In other words, the pattern jig 12 may be located below the electrode E.

The pattern jig 12 may include a pattern shape formed to guide the laser irradiated from the first light source unit 10 and the second light source unit 11. For example, the pattern jig 12 may have a depression recessed in a certain portion, and the depression may be a path along which the first light source unit 10 and the second light source unit 11 move.

Specifically, the pattern jig 12 may include a first path 10a formed so that the first light source unit 10 moves along and irradiates the laser, and a second path 11a formed so that the second light source unit 11 moves along and irradiates the laser.

Since the first light source unit 10 and the second light source unit 11 have the same movement pattern, the shape of the first path 10a and the shape of the second path 11a may be identical to each other.

Additionally, since the first light source unit 10 and the second light source unit 11 move in a state of being spaced apart from each other at a certain interval, the shape of the second path 11a may be a shape in which the shape of the first path 10a moves a certain distance.

The first path 10a and the second path 11a may include a first section R1 formed along the transfer direction of the electrode E, a second section R2 formed in a diagonal direction from one end of the first section R1, a third section R3 formed along the transfer direction of the electrode E from one end of the second section R2 and formed at the end of the electrode E further than the first section R1, and a fourth section R4 formed in a diagonal direction from the third section R3 and connected to the other end of the first section R1. In this case, the second section R2 and the fourth section R4 may be formed to intersect each other.

That is, the first light source unit 10 and the second light source unit 11 may move sequentially through the first section R1 to the fourth section R4, and may irradiate the laser toward the electrode E while repeatedly circulating through the first section R1 to the fourth section R4.

While the position of the pattern jig 12 is fixed and the first light source unit 10 and the second light source unit 11 are positioned above the electrode E, a portion of the electrode E may move between the first light source unit 10 and the second light source unit 11 and the pattern jig 12.

The above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments.

The scope of protection of the present disclosure should be interpreted in accordance with the claims below, and all technical ideas within the scope equivalent thereto should be construed as being included in the scope of the present disclosure.

### [List of Reference Numerals]

1: Notching device
10: First light source unit
11: Second light source unit
12: Pattern jig
10a: First path
11a: Second path
R1: First section
R2: Second section
R3: Third section
R4: Fourth section
E: Electrode
T: Active material layer
S1: First insulating layer
S2: Second insulating layer
M: Metal layer

## Claims

1. A notching device, which cuts an electrode that is transferred in a certain direction and comprises a metal layer, a first insulating layer laminated on an upper surface of the metal layer, and a second insulating layer laminated on a lower surface of the metal layer, the notching device comprising:
a first light source unit located above the electrode and irradiating a laser so that the laser passes through the first insulating layer and reaches the metal layer; and
a second light source unit located on one side of the first light source unit and irradiating a laser so that the laser passes through the first insulating layer and the metal layer and reaches the lower surface of the second insulating layer.

2. The notching device according to claim 1, wherein the first light source unit and the second light source unit are disposed sequentially along the transfer direction of the electrode.

3. The notching device according to claim 2,
wherein the first light source unit irradiates the laser while moving along a first path, and the second light source unit irradiates the laser while moving along a second path,
wherein the shape of the first path and the shape of the second path are identical to each other.

4. The notching device according to claim 3,
wherein the shape of the second path is a shape in which the shape of the first path moves a certain distance.

5. The notching device according to claim 4,
wherein the first path and the second path comprise:
a first section formed along the transfer direction of the electrode;
a second section formed in a diagonal direction from one end of the first section;
a third section formed along the transfer direction of the electrode from one end of the second section and formed at the end of the electrode further than the first section; and
a fourth section formed in a diagonal direction from the third section and connected to the other end of the first section.

6. The notching device according to claim 5,
wherein when the first light source unit passes through the second section, the second light source unit passes through the first section,
when the first light source unit passes through the third section, the second light source unit passes through the second section,
when the first light source unit passes through the fourth section, the second light source unit passes through the third section, and
when the first light source unit passes through the first section, the second light source unit passes through the fourth section.

7. The notching device according to claim 6,
wherein the first light source unit and the second light source unit sequentially irradiate the laser to create an uneven shape on the electrode.

8. The notching device according to claim 6,
wherein the first path and the second path comprise a circulated form.

9. The notching device according to claim 1,
wherein the second light source unit irradiates the laser to a point of the electrode to which the first light source unit irradiates the laser.

10. The notching device according to claim 1, further comprising:
a pattern jig positioned on the opposite side of the first light source unit and the second light source unit based on the electrode and forming a path along which the first light source unit and the second light source unit irradiate the laser.

11. The notching device according to claim 10,
wherein the pattern jig comprises a first path formed so that the first light source unit moves along and irradiates the laser, and a second path formed so that the second light source unit moves along and irradiates the laser,
wherein the shape of the first path and the shape of the second path are identical to each other, and the shape of the second path is a shape in which the shape of the first path moves a certain distance.

12. The notching device according to claim 11,
wherein the first path and the second path comprise:
a first section formed along the transfer direction of the electrode;
a second section formed in a diagonal direction from one end of the first section;
a third section formed along the transfer direction of the electrode from one end of the second section and formed at the end of the electrode further than the first section; and
a fourth section formed in a diagonal direction from the third section and connected to the other end of the first section.

13. The notching device according to claim 12,
wherein the first light source unit and the second light source unit sequentially irradiate the laser to create an uneven shape on the electrode.

14. The notching device according to claim 10,
wherein while the position of the pattern jig is fixed and the first light source unit and the second light source unit are located above the electrode, a portion of the electrode moves between the first light source unit and the second light source unit and the pattern jig.
